# EUROPÄISCHE PATENTANMELDUNG

(11) **EP 1 749 941 A1**
(43) Veröffentlichungstag der Anmeldung: **07.02.2007**
(21) Anmeldenummer: 05016644.6
(22) Anmeldetag: 01.08.2005
(51) Int. Cl.: E03D 3/04, E03D 1/36, F16K 21/12, F16K 31/40

(54) **Hydraulischer Aktuator, insbesondere für eine Spülsteuerung**

(71) Anmelder: SANIMATIC AG, 8954 Geroldswil (CH)
(72) Erfinder: Bögli, Heinz, 5442 Fislisbach (CH); Furegati, Renato, 8953 Dietikon (CH)
(74) Vertreter: Schaad, Balass, Menzl & Partner AG

(57) **Zusammenfassung**

Ein erfindungsgemässer Aktuator weist ein Pilotventil (151) gesteuertes Zuflussventil (144) auf, mittels welchem ein Fluid, insbesondere Wasser, in ein Zylindervolumen (72) einer Zylinder-Kolben-Anordnung (28) einlassbar ist. Das Zylindervolumen (72) ist durch ein Auslassventil (100) verschliessbar. In geöffneter Stellung des Zuflussventils (144), fliesst das Fluid in das Zylindervolumen (72) ein und bewegt einen Kolben (54) der Zylinder-Kolben-Anordnung (28) - entgegen einer auf den Kolben (54) wirkenden Kraft einer Schraubenfeder (64) - von einer Minimalhubposition in eine Maximalhubposition (Max). In einem an die Maximalhubposition (Max) angrenzenden Maximalhubendbereich (MaxHEB), wird das Auslassventil (100) von einem mit dem Kolben (54) fest verbundenem Betätigungsorgan (126) geöffnet. Nach Erreichen der Maximalhubposition (Max) wird das Zuflussventil (144) geschlossen. Da durch das Auslassventil (100) das Fluid ausströmt, bewegt sich der Kolben (54), aufgrund der Kraft der Schraubenfeder (64), wieder zurück in die Minimalhubposition. Beim Durchlaufen eines an die Minimalhubposition (Min) angrenzenden Minimalhubendbereich (MinHEB) wird das Auslassventil (100) durch den Kolben (54) wieder verschlossen. Sobald das Zuflussventil (144) wieder geöffnet wird, durchläuft der Aktuator einen weiteren Arbeitszyklus.

## Beschreibung

Die vorliegende Erfindung betrifft einen Aktuator gemäss dem Oberbegriff des Anspruchs 1.

Ein gattungsbildender Aktuator ist aus WO 87/02751 bekannt. Diese Druckschrift offenbart einen Aktuator zur Steuerung eines Dosierventils. Der Aktuator besteht aus einer Zylinder-Kolben-Anordnung, wobei ein Kolben dieser Zylinder-Kolben-Anordnung als ein Ventilglied des Dosierventils ausgebildet ist. Bei geschlossenem Dosierventil befindet sich der Kolben in einer Maximalhubposition. Ein Zylindervolumen der Zylinder-Kolben-Anordnung ist dauernd über einen Zuflusskanal mit einem Wasserzufluss zum Dosierventil verbunden, wobei der Zuflusskanal durch den Kolben hindurch führt. In einer Bodenfläche des Zylinders ist ein Auslassventil angeordnet, welches über ein Handbetätigungselement geöffnet werden kann. Durch Öffnen des Auslassventils wird Wasser, das sich im Zylindervolumen befindet, aus diesem abgelassen, wodurch sich der Kolben in eine Minimalhubposition bewegt, und sich dadurch das Dosierventil öffnet. Der Kolben schliesst beim Durchqueren eines an die Minimalhubposition angrenzenden Minimalhubendbereichs das Auslassventil, worauf sich das Zylindervolumen wieder mit Wasser füllt. Dadurch wird der Kolben von der Minimalhubposition zurück in die Maximalhubposition bewegt und das Dosierventil wird geschlossen.

Das Zylindervolumen ist dauernd mit Wasser gefüllt und dem vollen Wasserdruck ausgesetzt. Dies führt zu einer starken mechanischen Belastung des Aktuators.

Es ist eine Aufgabe der vorliegenden Erfindung einen gattungsgemässen Aktuator zu schaffen, welcher weniger belastet ist.

Diese Aufgabe wird mit einem Aktuator gemäss Anspruch 1 gelöst.

Erfindungsgemäss erfolgt der Zufluss des Fluids in das Zylindervolumen hinein durch ein Zuflussventil und der Abfluss des Fluids aus dem Zylindervolumen heraus ist durch das Auslassventil gesteuert. Bei der Bewegung des Kolbens von der Minimalhubposition in die Maximalhubposition, beim Durchlaufen eines an die Maximalhubposition angrenzenden Maximalhubendbereichs, öffnet ein mit dem Kolben verbundenes Betätigungsorgan das Auslassventil. Ebenso wird bei der Bewegung des Kolbens von der Maximalhubposition in die Minimalhubposition, beim Durchqueren des an die Minimalhubposition angrenzenden Minimalhubendbereich das Auslassventil durch den Kolben geschlossen.

Folglich ist das Auslassventil automatisch, durch die Bewegung des Kolbens gesteuert und bei geschlossenem Zuflussventil wirkt der Wasserdruck nicht auf die Zylinder-Kolben-Anordnung des erfindungsgemässen Aktuators.

In einer bevorzugten Ausführungsform ist der Kolben mit dem Betätigungsorgan fest verbunden, welches in einer durch einen Boden des Zylinders hindurchführende Durchgangsöffnung geführt ist.

Dadurch ist es zum einen möglich, den Kolben zu führen und zum anderen ermöglicht dies das Öffnen des Ausflussventils mittels des Betätigungsorgans. Gleichzeitig lässt sich mit dem Betätigungsorgan eine Spüleinrichtung in einem Spülkasten betätigen.

Weitere bevorzugte Ausbildungsformen des erfindungsgemässen Aktuators sind in den weiteren abhängigen Ansprüchen angegeben.

Weitere besondere Vorteile und Wirkungsweisen des erfindungsgemässen Aktuators ergeben sich aus der Detailbeschreibung und der Zeichnung.

Im Folgenden wir die Erfindung anhand eines in der Zeichnung dargestellten Ausführungsbeispiels näher erläutert.

Es zeigen rein schematisch:
- Fig. 1: Im Längsschnitt einen in einem Spülkasten angeordneter Aktuator mit einer Zylinder-Kolben-Anordnung, wobei sich ein Kolben der Zylinder-Kolben-Anordnung in einer Minimalhubposition befindet, ein Zuflussventil wie auch ein Auslassventil geschlossen sind und ein Betätigungsorgan des Aktuators mit einem Betätigungselement einer im Spülkasten angeordneten Spüleinrichtung verbunden ist;
- Fig. 2: in gleicher Darstellung wie Fig. 1 den Aktuator, wobei sich der Kolben in einer Maximalhubposition befindet und das Zuflussventil wie auch das Auslassventil geöffnet sind; und
- Fig. 3: eine weitere Ausführungsform einer Zuflusssteuerung für den Aktuator.

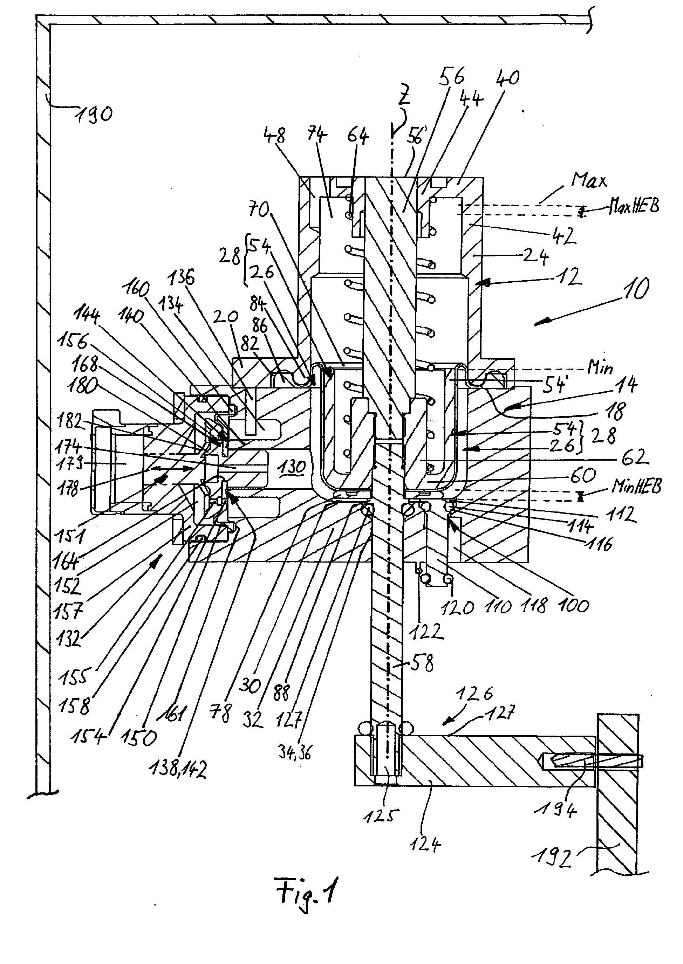

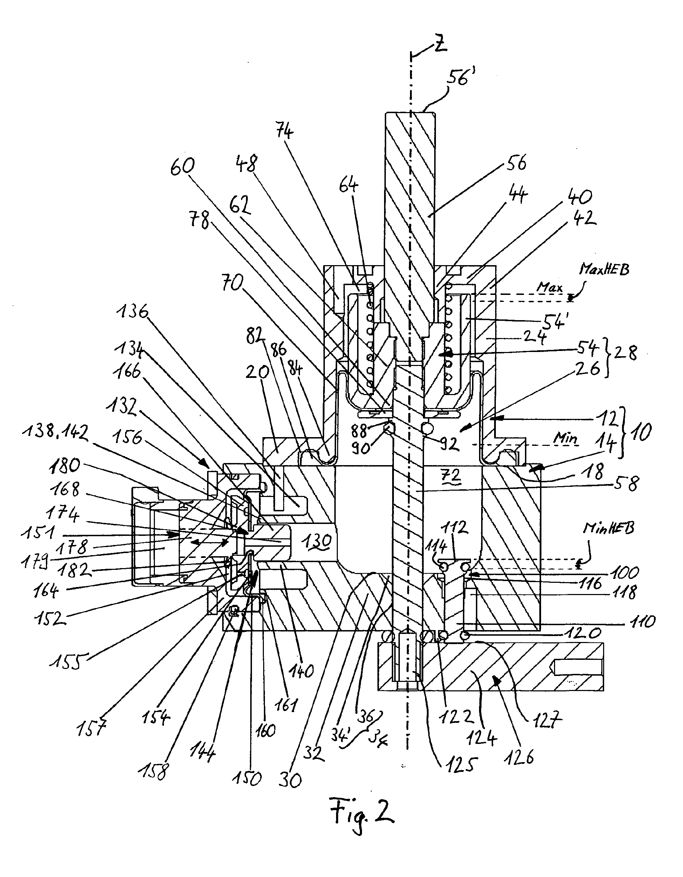

In den Fig. 1 und Fig. 2 ist ein erfindungsgemässer Aktuator gezeigt. Der Aktuator weist ein zweiteiliges Aktuatorgehäuse 10 - einen oberen Gehäuseteil 12 und einen unteren Gehäuseteil 14 - auf. Der untere Gehäuseteil 14 weist eine im Wesentlichen quaderförmige Grundform auf, welche an einer oberen, dem oberen Gehäuseteil 12 zugewandten Gehäuseseite einen Sitz 18 für den oberen Gehäuseteil 12 aufweist. Der Sitz 18 ist durch eine Zentriervertiefung in den untern Gehäuseteil 14 ausgebildet.

Der obere Gehäuseteil 12 weist eine im Wesentlichen quaderförmige Sockelplatte 20 auf, welche zur Zentrierung in den Sitz 18 eingreift. Weiter weist der obere Gehäuseteil 12 ein zylinderförmiges Gehäuseelement 24 auf, welches vom unteren Gehäuseteil 14 wegweisend, an die Sockelplatte 20 angeformt ist. Der obere Gehäuseteil 12 ist mittels nicht gezeigten Schrauben, welche die Sockelplatte 20 durchgreifen, mit dem unteren Gehäuseteil 14 verschraubt.

Das zylinderförmige Gehäuseelement 24 weist einen konstanten Aussendurchmesser auf und definiert eine Zylinderachse Z, die rechtwinklig zu einer Grundfläche der Sockelplatte 20 verläuft. Ein Zylinder 26 der Zylinder-Kolben-Anordnung 28 mit Zylinderachse Z ist gebildet durch das zylindrische Gehäuseelement 24, durch einen an dieses Gehäuseelement 24 angrenzenden Bereich der Sockelplatte 20, welcher eine zylindrische Ausnehmung aufweist, und durch eine sacklochartige Ausnehmung im unteren Gehäuseteil 14. Die sacklochartige Ausnehmung weist eine rechtwinklig zur Zylinderachse Z stehende Bodenfläche 30 eines Zylinderbodens 32 auf.

Gegenüberliegend von der Bodenfläche 30 wird der Zylinder 26 durch ein Deckenelement 40 begrenzt. Ein Innendurchmesser des Zylinders 26 ist ausser in einem an die Bodenfläche 30 angrenzenden Endbereich der sacklochartigen Ausnehmung und in einem an das Deckenelement angrenzenden Endbereich 42 konstant.

Durch den Zylinderboden 32 ist eine rotationssymmetrisch zur Zylinderachse Z verlaufende Durchgangsöffnung 34 ausgebildet. Ein Durchmesser der Durchgangsöffnung 34 verjüngt sich zunächst in einem Anschlagbereich 34' von der Bodenfläche 30 her trichterförmig (siehe Fig. 2) und weist daran anschliessend, in einem Führungsabschnitt 36 des Zylinderbodens 32 einen konstanten Durchmesser auf.

Das Deckenelement 40 weist eine in einen Hohlraum des Zylinders 26 hineinragende Führungshülse 44 mit einer radial innenliegenden Führungsoberfläche auf. Das Deckenelement 40 wird weiter von einem Entlüftungskanal 48 durchbrochen, der die Umgebung des Aktuatorgehäuses 10 mit dem Hohlraum des Zylinders 26 verbindet.

Ein Kolbenelement 54' der Zylinder-Kolben-Anordnung 28 ist im Zylinder 26 angeordnet. Das Kolbenelement 54' ist symmetrisch zur Zylinderachse Z und ist in Richtung der Zylinderachse Z hin und her - von einer in Fig. 2 gezeigten Maximalhubposition Max in eine in Fig. 1 gezeigte Minimalhubposition Min und wieder zurück - verschiebbar gelagert. Hierzu ist das Kolbenelement 54' zwischen einem sechskantig ausgebildeten Führungsstift 56 und einem Betätigungsstift 58 angeordnet, wobei der Führungsstift 56 durch die Führungshülse 44 des Deckenelements 40 geführt ist und der Betätigungsstift 58 durch den Führungsabschnitt 36 des Zylinderbodens 32 zumindest quasidicht geführt ist. Der Führungsstift 56 und der Betätigungsstift 58 sind mit dem Zylinder 26 fest verbunden, wobei für die feste Verbindung jeweils eine Schraubverbindung bevorzug ist. Der Führungsstift 56 weist eine freiliegende, ausserhalb des Aktuatorgehäuses 10 liegende Stirnfläche 56' auf.

Das Kolbenelement 54' ist becherartig ausgebildet und weist an einer dem Deckenelement 40 zugewandten Innenfläche seines Becherbodens 60 eine mittig angeordnete Gewindehülse 62 mit einem in Richtung der Zylinderachse Z ausgerichteten, durch den Becherboden 60 hindurchgeführten Gewindeloch auf. In das Gewindeloch ist von der einen Seite her der Führungsstift 56 und von der anderen Seite her der Betätigungsstift 58 eingeschraubt.

In der Maximalhubposition Max des Kolbenelements 54' bildet die Führungshülse 44 einen Anschlag für das Kolbenelement 54'. Hierzu wirkt eine dem Kolbenelement 54' zugewandte, rechtwinklig zur Zylinderachse Z stehende und kreisringförmige Stirnfläche der Führungshülse 44 mit einer Stirnfläche der Gewindehülse 62 zusammen. Ein Aussendurchmesser der Gewindehülse 62 ist gleich einem Aussendurchmesser der Führungshülse 44 ausgebildet.

Eine in Richtung der Zylinderachse Z ausgerichtete Schraubenfeder 64 umfasst einerseits die Führungshülse 44 und andererseits die Gewindehülse 62 und ist einerseits am Deckenelement 40 und andererseits am Kolbenelement 54' abgestützt. Die Schraubenfeder 64 übt auf das Kolbenelement 54' eine von der Maximalhubposition Max in die Minimalhubposition Min gerichtete Kraft aus.

Ein Aussendurchmesser des Kolbenelements 54' ist kleiner gewählt als ein Innendurchmesser des Zylinders 26, wodurch zwischen dem Kolbenelement 54' und dem Zylinder 26 ein ringartigere Spalt ausgebildet ist. In diesem Spalt ist eine Rollmembran 70 angeordnet, die einerseits am Zylinder 26 gehalten und andererseits am Kolbenelement 54' abgestützt ist. In einem unbelasteten Zustand ist die Rollmembran 70 hutförmig.

Die Rollmembran 70 unterteilt den Hohlraum im Zylinder 26 in ein Zylindervolumen 72 und in ein Restvolumen 74, wobei das Kolbenelement 54' im Restvolumen 74 liegt und das Restvolumen 74 über den Entlüftungskanal 48 mit der Umgebung des Zylinders 26 verbunden ist. Das Zylindervolumen 72 ist durch die vom Kolbenelement 54' gestützte Rollmembran 70 und durch eine Sacklochoberfläche des im unteren Gehäuseteil 14 liegenden Bereich des Zylinders 26 begrenzt.

Die Rollmembran 70 ist einerseits, radial aussen zwischen dem zweiteiligen Aktuatorgehäuse 10 und andererseits, radial innen zwischen dem Kolbenelement 54' und einem vom Betätigungsstift 58 gehaltenen Klemmring 78 eingeklemmt. Hierzu weist der obere Gehäuseteil 12 eine umlaufende Ringnut 82 auf, welche etwas beabstandet zu einer Mantelfläche des Zylinder 26 in der Sockelplatte 20 um den Hohlraum des Zylinders 26 herum läuft und dadurch zwischen der Ringnut 82 und dem Hohlraum des Zylinder 26 einen Steg 84 ausbildet. Dieser ist im auf das untere Gehäuseteil 14 montierten Zustand des oberen Gehäuseteils 12 etwas vom unteren Gehäuseteil 14 beabstandet. Die Rollmembran 70 von im Wesentlichen konstanter Stärke weist an ihrem radial aussenliegenden Rand, in einem krempenartigen Bereich der hutförmigen Rollmembran 70, eine umlaufende Wulst 86 auf, welche in die Ringnut 82 eingelegt ist. Radial innenliegend weist die Rollmembran 70 ein Durchgangsloch auf, durch welches der Betätigungsstift 58 geführt ist. Gehalten wird die Rollmembran 70 durch Einklemmen dieser zwischen dem Kolbenelement 54' und dem Klemmring 78, der seinerseits durch eine ringartige Verdickung 88 des Betätigungsstifts 58 in Richtung des Kolbenelements 54' gedrückt wird. Das Kolbenelement 54' bildet zusammen mit dem Klemmring 78 einen Kolben 54 der Zylinder-Kolben-Anordnung 28.

Angrenzend an die ringartige Verdickung 88 des Betätigungsstifts 58, gegenüber vom Klemmring 78 ist der Betätigungsstift 58 von einem O-Ring 90 umgriffen, welcher von der ringartigen Verdickung 88 einerseits und von einer kegelstumpfartigen Verdickung 92 andererseits gehalten ist. In der in Fig. 1 gezeigten Minimalhubposition Min des Kolbens 54 liegt der den Betätigungsstift 58 innerhalb des Zylinders umgreifende O-Ring 90 an eine Oberfläche des Anschlagbereichs 34' der Durchgangsöffnung 34 durch den Zylinderboden 32 an, wodurch die Bewegung des Kolbens 54 in die Minimalhubposition Min durch den O-Ring 90 elastisch abgefedert wird. Weiter dichtet der O-Ring 90 in der Minimalhubposition Min durch Anliegen an den Anschlagbereich 34' die Durchgangsöffnung 34 bezüglich dem Zylindervolumen 72 ab, wodurch ein vollständiges Entleeren und folglich auch ein Austrocknen des Zylindervolumens 72 verhindert wird.

Ein Auslassventil 100 ist im Zylinderboden 32 angeordnet, welches ein Ausströmen eines im Zylinder 26 enthaltenen Fluids bei geöffnetem Auslassventil 100 ermöglicht.

Ein Stössel 110 des Auslassventils 100 verläuft parallel zur Zylinderachse Z durch den Zylinderboden 32 hindurch und ist an einem dem Kolben 54 zugewandten Ende fest mit einem Ventilteller 112 verbunden. Direkt angrenzend an den Ventilteller 112 ist der Stössel 110 von einem O-Ring 114 umgriffen. Dieser liegt bei geschlossenem Auslassventil 100 an einem Auslassventilsitz 116 an, welcher sich vom Hohlraum des Zylinders 26 her trichterförmig in den Zylinderboden 32 hinein verjüngt. Angrenzend an den Auslassventilsitz 116 folgt ein durch den Zylinderboden 32 hindurchführender Ausflusskanal 118, der anfänglich, angrenzend an den Auslassventilsitz 116 um den Stössel 110 herum und dann parallel zum Stössel 110, direkt angrenzend an diesen verläuft. Der Stössel 110 ist durch eine zylinderförmige Führung im Zylinderboden 32 in Richtung der Zylinderachse Z beweglich gehalten.

In einem in Fig. 2 gezeigten, vollständig geöffneten Zustand des Auslassventils 100 ist dieses bezüglich des in Fig. 1 gezeigten geschlossenen Zustandes in Richtung des oberen Gehäuseteils 12 um einen Auslassventilhub verschoben.

In Richtung der Zylinderachse Z wird eine Bewegungsfreiheit des Stössels 110 einerseits durch den an den Ventilteller 112 anliegenden O-Ring 114 und andererseits durch einen weiteren O-Ring 120, der in einem dem Ventilteller 112 gegenüberliegenden, aus dem unteren Gehäuseteil 14 herausragenden Endbereich angeordnet ist, begrenzt. Im vollständig geöffneten Zustand liegt der weitere O-Ring 120 aussenseitig am unteren Gehäuseteil 14 an. Eine am unteren Gehäuseteil 14 angeordnete, von diesem abstehende Rastnase 122 bildet mit dem weiteren O-Ring 120 eine Rastverbindung, wobei der weitere O-Ring 120 beim Einrasten in die Rastnase 122 beziehungsweise beim Lösen der Rastverbindung elastisch verformt wird. Die Rastnase 122 sichert das Auslassventil 100 in der vollständig geöffneten Stellung, indem der weitere O-Ring 120 zwischen dem unteren Gehäuseteil 14 und der Rastnase 122 gehalten ist.

An einem ausserhalb des Aktuatorgehäuses 10 liegenden Endbereich des Betätigungsstifts 58 ist ein radial vom Betätigungsstift 58 abstehender Betätigungsarm 124 fest angeordnet, wobei der Betätigungsarm 124 bevorzugt mittels einer Schraubverbindung 125 am Betätigungsstift 58 befestigt ist. Der Betätigungsstift 58 bildet zusammen mit dem Betätigungsarm 124 ein Betätigungsorgan 126. Der Betätigungsarm 124 weist eine dem Aktuatorgehäuse 10 zugewandte, rechtwinklig zur Zylinderachse Z liegende Betätigungsfläche 127 auf (siehe Fig. 2), welche bei der Bewegung des Kolbens 54 von der Minimalhubposition Min in die Maximalhubposition Max mit dem Stössel 110 zum Öffnen des Auslassventils 100 zusammen wirkt. Um die Bewegung des Kolbens 54 und des Betätigungsorgansorgans 126 bei der Bewegung in die Maximalhubposition Max elastisch abzufedern, ist der Betätigungsstift 58 von einem an den Betätigungsarm 124 anliegenden O-Ring umgriffen.

In der Minimalhubposition Min des Kolbens 54 ist die Betätigungsfläche 127 um den Hub des Kolbens 54 abzüglich des Auslassventilhubs entfernt und das Auslassventil 100 ist geschlossen. Bei einer Bewegung des Kolbens 54 - und somit der Betätigungsfläche 127 - in Richtung der Maximalhubposition Max, gelangt die Betätigungsfläche 127 bei einer Entfernung des Kolbens 54 zur Maximalhubposition Max, die dem Auslassventilhub entspricht, in Anlage an diesen. Bei der Weiterbewegung des Kolbens 54 in die Maximalhubposition Max wird dadurch das Auslassventil 100 geöffnet. Ein Hubbereich des Kolbens 54, in welchem das Auslassventil 100 durch die Bewegung des Kolbens 54 geöffnet wird, ist als Maximalhubendbereich MaxHEB bezeichnet. Folglich wird das Auslassventil 100 bei der Bewegung des Kolbens 54 von der Minimalhubposition Min in die Maximalhubposition Max im zeitlichen Ablauf erst kurz vor Erreichen der Maximalhubposition Max, beim Durchlaufen des Maximalhubendbereichs MaxHEB geöffnet.

Zum Schliessen (siehe Fig. 1) des Auslassventils 100 wirkt der am Betätigungsstift 58 angeordnete Klemmring 78 mit dem Ventilteller 112 zusammen, sodass bei der Bewegung des Kolbens 54 in die Minimalhubposition Min das Auslassventil 100 geschlossen wird. In der Minimalhubposition Min drückt der Klemmring auf den Ventilteller 112, wodurch der am Ventilteller 112 anliegende O-Ring auf den Auslassventilsitz 116 gedrückt wird und das Auslassventil 100 dicht verschliesst.

Dem Maximalhubendbereich MaxHEB entsprechend ist ein Minimalhubendbereich MinHEB definiert. In der Maximalhubposition Max des Kolbens 54 ist das Auslassventil 100 vollständig geöffnet. Bei der Bewegung des Kolbens 54 in Richtung der Minimalhubposition Min, bleibt das Auslassventil anfänglich in der vollständig geöffneten Position. Sobald der Kolben 54 in den Minimalhubendbereich HinHEB eintritt, gelangt der Klemmring 78 in Anlage an den Ventilteller 112 des Auslassventils 100 und das Auslassventil 100 wird durch die Weiterbewegung des Kolbens 54 in die Minimalhubposition Min geschlossen.

Seitlich, durch eine Mantelfläche des Zylinders 26, mündet ein im unteren Gehäuseteil 14, rechtwinklig zur Zylinderachse Z verlaufender Zuflusskanal 130 in das Zylindervolumen 72 hinein. Der Zuflusskanal 130 verbindet eine Aufnahmeöffnung für eine Zuflusssteuerung 132 mit dem Zylindervolumen 72. Um den Zuflusskanal 130 herum angeordnet und beabstandet von diesem mündet ein ringförmiger Speisekanal 134 ebenfalls in die Aufnahmeöffnung der Zuflusssteuerung 132. Ein weiterer Speisekanal 136 verbindet einen Anschluss für das Fluid, insbesondere Wasser, mit dem ringförmigen Speisekanal 134.

Eine kreisringförmige Stirnfläche 138 einer zwischen dem Zuflusskanal 130 und dem Speisekanal 134 liegenden Wand 140 bildet einen Ventilsitz 142 eines Zuflussventils 144 der Zuflusssteuerung 132. Das Zuflussventil 144 regelt den Zufluss des Fluids vom Speisekanal 134 in den Zuflusskanal 130 und somit in das Zylindervolumen 72.

Das Zuflussventil 144 weist eine kreisförmige, mit dem Ventilsitz 142 zusammenwirkende Ventilmembran 150 auf und ist mittels eines Pilotventils 151 gesteuert. Das Zuflussventil 144 bildet zusammen mit dem Pilotventil 151 und einer Antriebsanordnung 179 für das Pilotventil 151 die Zuflusssteuerung 132. Auf der einen Seite der Ventilmembran 150 liegt ein Steuervolumen 152 und auf der anderen Seite der Ventilmembran 150 liegt der Speisekanal 134 und der Zuflusskanal 130, wobei der Speisekanal 134 über eine Öffnung 154 in der Ventilmembran 150 und über eine Durchflussöffnung 155 durch einen die Ventilmembran 150 stützenden Stützteller 156 dauernd mit dem Steuervolumen 152 verbunden ist. Ein Zuflusssteuerungsgehäuse 157, welches in die Aufnahmeöffnung für die Zuflusssteuerung 132 eingesetzt und gegenüber dem unteren Gehäuseteil 14 mittels eines O-Rings 158 abgedichtet ist, begrenzt zusammen mit der Ventilmembran 150 das Steuervolumen 152.

An einem radial äusseren Rand weist die Ventilmembran 150 eine umlaufenden Wulst 160 auf. Diese Wulst 160 ist dichtend in eine radial ausserhalb des ringförmigen Speisekanals 134 angeordnete Nut 161 im unteren Gehäuseteil 14 eingelegt und ist in der Nut 161 durch das Zuflusssteuerungsgehäuse 157 gehalten. Die kreisringförmige Ventilmembran 150 weist eine zentrale Öffnung mit einem Durchmesser kleiner einem Durchmesser des Zuflusskanals 130 auf. Ein radial innenliegender Rand der Öffnung ist in eine umlaufende Nut 164 eines beweglichen Ventilstifts 166 eingelegt, welcher fest mit dem Stützteller 156 verbunden ist. Der Stützteller 156 bildet zusammen mit dem Ventilstift 166 ein Führungsglied 168, mittels welchem die Ventilmembran 150 auf den Ventilsitz 142 gedrückt werden kann.

Das Führungsglied 168 ist rotationssymmetrisch, im Querschnitt T-förmig aufgebildet. Der Ventilstift 166 ist im Zuflusskanal 130 geführt und weist in Längsrichtung des Zuflusskanals 130 verlaufende Durchströmungskanäle auf, mittels welchen ein Durchfliessen des Fluids bei geöffnetem Zuflussventil 144 durch den Zuflusskanal 130 gewährleistet ist.

Bei am Ventilsitz 142 anliegender Ventilmembran 150 (siehe Fig. 1) ist das Zuflussventil 144 geschlossen und ein Fliessen des Fluids vom Speisekanal 134 in den Zuflusskanal 130 ist verhindert. Bei vom Ventilsitz 142 beabstandeter Ventilmembran 150 (siehe Fig. 2) ist das Zuflussventil 144 geöffnet und das Fluid kann vom Speisekanal 134 in den Zuflusskanal 130 fliessen.

Ein durch das Führungsglied 168 axial verlaufender Abflusskanal 174 ist mittels des Pilotventils 151 verschliessbar, wobei im geöffneten Zustand des Pilotventils 151 das Steuervolumen 152 über den Abflusskanal 174 mit dem Zuflusskanal 130 verbunden ist. Der Abflusskanal 174 weist einen grösseren Strömungsquerschnitt auf, als die Öffnung 154 in der Ventilmembran 150.

Das Pilotventil 151 ist durch ein in Axialrichtung des Zuflusskanals 130 bewegliches, im Zuflusssteuerungsgehäuse 157 geführtes, stiftförmiges Pilotventilglied 178 und durch einen am Stützteller 156 angeordneter Pilotventilsitz 180 ausgebildet. Am Pilotventilglied 178 ist eine Unterstützungsfeder angeordnet, welche eine in Richtung des Pilotventilsitzes 180 wirkende Kraft auf das Pilotventilglied 178 ausübt. Das Pilotventilglied 178 ist mittels der elektromagnetisch ausgebildeten Antriebsanordnung 179 bistabil von einer in das Zuflusssteuerungsgehäuse 157 eingefahrenen, geöffneten Position (siehe Fig. 2) in eine bezüglich der geöffneten Position in Richtung des Zuflusskanals 130 verschobene, geschlossene Position (siehe Fig. 1) verschiebbar.

An das Pilotventilglied 178 ist in seinem, dem Stützteller 156 zugewandten Endbereich eine gummielastische Dichtungslippe 182 angeformt. Diese weist eine Form einer Kegelstumpfmantelfläche auf, wobei ein Ende mit dem grössten Durchmesser freiliegend ist. Falls das Pilotventil 151 geschlossen ist, liegt die Dichtungslippe 182 an den Pilotventilsitz 180 an, falls das Pilotventil 151 geöffnet ist, ist die Dichtungslippe 182 vom Pilotventilsitz 180 beabstandet.

Die Arbeitsweise des erfindungsgemässen Aktuators ist wie folgt.

In der in Fig. 1 gezeigten Ausgangsstellung des erfindungsgemässen Aktuators befindet sich der Kolben 54 in seiner Minimalhubposition Min und das Zuflussventil 144, das Pilotventil 151 und das Auslassventil 100 sind geschlossen. Im Speisekanal 134 und im Steuervolumen 152 herrscht derselbe Druck, wodurch die durch das Führungsglied 168 gestützte Ventilmembran 150 auf den Ventilsitz 142 gedrückt wird und das Zuflussventil 144 geschlossen ist.

Sobald das Pilotventil 151 durch einen elektrischen Impuls geöffnet wird, fällt der Druck im Steuervolumen 152 ab, wodurch durch den im Speisekanal 134 herrschenden Druck die Ventilmembran 150 vom Ventilsitz 142 abhebt und das Zuflussventil 144 geöffnet wird. Das Fluid fliesst darauffolgend vom Speisekanal 134 in den Zuflusskanal 130 und weiter in das Zylindervolumen 72. Durch das Einströmen des Fluids in das Zylindervolumen 72 wird der Kolben 54 entgegen der Kraft der Schraubenfeder 64 von der Minimalhubposition Min in Richtung der Maximalhubposition Max bewegt. Sobald die Betätigungsfläche 127 des Betätigungsarms 124 in Berührung mit dem Stössel 110 gelangt, wird durch die Weiterbewegung des Kolbens 54 durch den Maximalhubendbereich MaxHEB in Richtung der Maximalhubposition Max das Auslassventil 100 geöffnet.

Sobald das Pilotventil 151 durch einen weiteren elektrischen Impuls geschlossen wird, baut sich im Steuervolumen 152 derselbe Druck wie im Speisekanal 134 auf, wodurch das Zuflussventil 144 geschlossen wird. Das sich im Zylindervolumen 72 befindende Fluid wird durch die Kraft der Schraubenfeder 64 aus dem Zylinder 26 durch das offene Auslassventil 100 herausgedrückt und der Kolben 54 bewegt sich zusammen mit dem Betätigungsstift 58 in Richtung der Minimalhubposition Min.

Sobald der Klemmring 78 in Kontakt mit dem Ventilteller 112 gelangt und durch die Weiterbewegung des Kolbens 54 durch den Minimalhubendbereich MinHEB in Richtung der Minimalhubposition Min wird das Auslassventil 100 geschlossen. Mit dem Verschliessen des Auslassventils 100 erreicht der Kolben die Minimalhubposition Min und der Aktuator ist wieder für einen weiteren Arbeitszyklus bereit.

Ein derartiger Aktuator ermöglicht beispielsweise das automatische Betätigen einer in einem Spülkasten 190 (siehe Fig. 1) einer Toilette oder Urinals angeordneten, allgemein bekannten Spülvorrichtung. Hierzu ist beispielsweise, wie in Fig. 1 gezeigt, der Betätigungsarm 124 des Aktuators mit einem Betätigungselement 192 der Spülvorrichtung mittels einer Schraubverbindung 194 fest verbunden. Die zum Betätigen der Spülvorrichtung aufzuwendende Kraft, wird vom Fluid, insbesondere unter Leitungsdruck stehendes Wasser, aufgebracht. Dank der bistabilen Ausführung der elektromagnetischen Antriebsanordnung 179 ist die Zuflusssteuerung 132 sehr energiesparsam ausgebildet und kann beispielsweise die elektrische Energie von einer Batterie beziehen. Dadurch ist eine automatische, vom Stromnetz unabhängige Spülvorrichtung realisierbar. Das Auslösen der automatischen Spülvorrichtung kann beispielsweise durch eine Infrarotsensor gesteuerte Schaltung erfolgen.

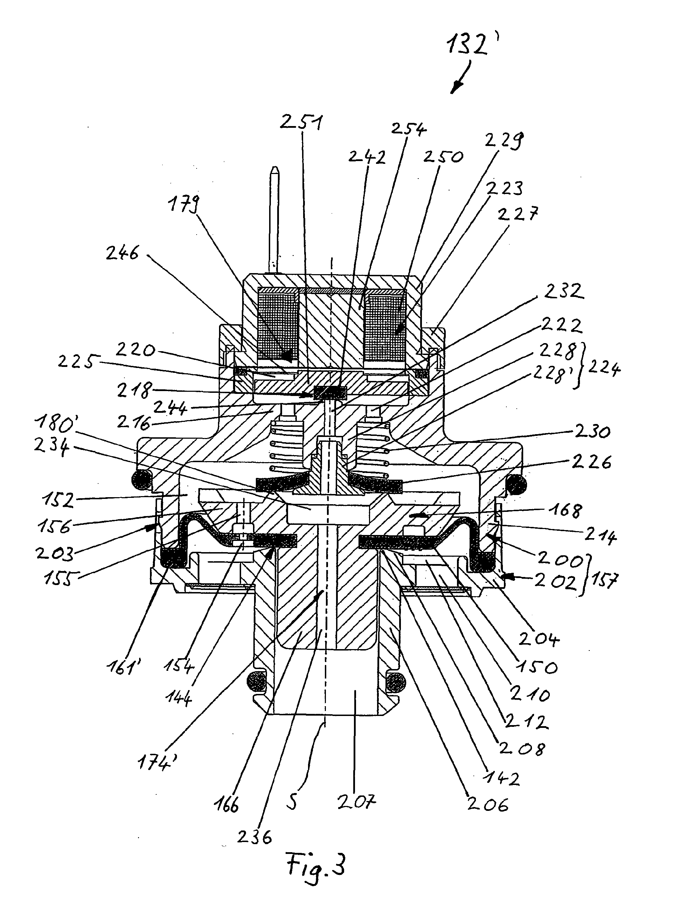

In einer weiteren Ausführungsform gelangt eine in Fig. 3 gezeigte Zuflusssteuerung 132' anstelle der in den Fig. 1 und 2 gezeigten Zuflusssteuerung 132 zur Anwendung. Für entsprechende Teile der Zuflusssteuerung 132' werden dieselben Bezugszeichen wie für die Zuflusssteuerung 132 der ersten Ausführungsform verwendet. Für gleiche bzw. entsprechende Elemente wird auf die erste Ausführungsform verwiesen.

Die Zuflusssteuerung 132' weist ein Zuflusssteuerungsgehäuse 157 gebildet aus einem aussenliegenden Zuflusssteuerungsgehäuseteil 200 und aus einem innenliegenden Zuflusssteuerungsgehäuseteil 202 auf, welche ineinander eingreifen und durch eine Schnappverbindung 203 gesichert sind.

Das innenliegende Zuflusssteuerungsgehäuseteil 202 weist eine becherartige, bezüglich einer Symmetrieachse S symmetrische Form auf. Von einem Becherboden 204 des innenliegenden Zuflusssteuerungsgehäuseteils 202, auf einer dem aussenliegenden Zuflusssteuerungsgehäuseteil 200 abgewandten Seite des Becherbodens 204 ist ein zur Symmetrieachse S symmetrischer Ausflussstutzen 206 mit Durchflusskanal 207 angeformt. Ein freier Endbereich des Ausflussstutzens 206 ist in den Zuflusskanal 130 (siehe Fig. 1 und 2) des unteren Gehäuseteils 14 eingesetzt und mittels einem O-Ring gegenüber der den Zuflusskanal 130 begrenzenden Wand 140 abgedichtet. Die Symmetrieachse S fällt bei in das untere Gehäuseteil 14 eingesetzter Zuflusssteuerung 132' mit einer Achse des Zuflusskanals 130 zusammen.

Auf einer dem aussenliegenden Zuflusssteuerungsgehäuseteil 200 zugewandten Seite des Becherbodens 204 ist in Verlängerung des Ausflussstutzens 206 eine den Ventilsitz 142 des Zuflussventils 144 bildende ringförmige Erhöhung 208 ausgeformt. Um den Durchflusskanal 207 herum verlaufen mehrere Durchgänge 210 durch den Becherboden 204 hindurch, welche den Speisekanal 134 (siehe Fig. 1 und 2) mit einem Ringkanal 212 um die Erhöhung 208 herum verbinden.

Um den Ringkanal 212 herum ist eine Nut 161' in das innenliegende Zuflusssteuerungsgehäuseteil 202 eingeformt, welche analog zur Nut 161 der ersten Ausführungsform dazu bestimmt ist, zusammen mit dem äusseren Zuflusssteuerungsgehäuseteil 200 die Ventilmembran 150 zu halten.

Die Ventilmembran 150 und das Führungsglied 168 sind gleich wie in der ersten Ausführungsform ausgebildet, wobei der Ventilstift 166 des Führungsglieds 168 im Durchflusskanal 207 des am innenliegenden Zuflusssteuerungsgehäuseteil 202 angeformten Ausflussstutzens 206 geführt ist. Eine in der ersten Ausführungsform als Pilotventilsitz 180 wirkende kreisringförmige Erhöhung bildet in dieser Ausführungsform einen Dichtungssitz 180'.

Durch einen an das innenliegende Zuflusssteuerungsgehäuseteil 202 anliegenden Mantelbereich 214 und einen rechtwinklig zur Symmetrieachse S liegenden Zwischenboden 216 das aussenliegende Zuflusssteuerungsgehäuseteil 200 und durch die Ventilmembran 150 ist das Steuervolumen 152 begrenzt. Das Steuervolumen 152 ist dauernd durch die als Drosselöffnung ausgebildete Öffnung 154 in der Ventilmembran 150 und durch die Durchflussöffnung 155 im Stützteller 156 des Führungsgliedes 168 mit dem Ringkanal 212 und folglich wiederum mit dem Speisekanal 134 verbunden.

Mittels eines Pilotventils 218 ist das aus dem Ventilsitz 142 und der Ventilmembran 150 gebildete Zuflussventil 144 regelbar. Hierzu weist die Zuflusssteuerung 132' einen Pilotventilraum 220 auf. Dieser ist über mehrere, durch den Zwischenboden 216 hindurch verlaufende Durchgänge 222 dauernd mit dem Steuervolumen 152 verbunden. Der im wesentlichen zylinderförmige Pilotventilraum 220 wird in Richtung der Symmetrieachse S einerseits vom Zwischenboden 216 und andererseits von einer freiliegenden Stirnfläche einer Spulenbaugruppe 223 eines Elektromagneten 250 begrenzt. In radialer Richtung ist der Pilotventilraum 220 angrenzend an den Zwischenboden 216 vom aussenliegenden Zuflusssteuerungsgehäuseteil 200 und angrenzend an die Spulenbaugruppe 223 von einem in das aussenliegende Zuflusssteuerungsgehäuseteil 200 eingesetzten Ringelement 225 begrenzt.

Die Spulenbaugruppe 223 mit dem Elektromagneten 250 und mit einem Spulenkern 254 aus einem Permanentmagneten ist in ein becherförmiges Spulengehäuse 229 dicht eingegossen. Das Spulengehäuse 229 ist in das aussenliegende Zuflusssteuerungsgehäuseteil 200 in Richtung der Symmetrieachse S eingesetzt und mittels einer Überwurfmutter 227 gesichert.

Im Pilotventilraum 220 ist ein mit dem Elektromagneten 250 und mit dem Spulenkerns 254 zusammenwirkender Anker 251 angeordnet. Dieser weist eine Form einer Kreisscheibe auf, wobei der Anker 251 in Richtung des Elektromagneten 250 einen zylindrischen Fortsatz aufweist. Dem Zwischenboden 216 zugewandt ist in den Anker 251 eine aus dem Anker 251 hervorstehende Dichtungsscheibe 242 zentriert eingelassen, welche mit einem um einen durch den Zwischenboden 216 in hindurch verlaufenden Abflusskanal 174' herum angeordneten Pilotventilsitz 244 zusammenwirkt.

Der Zylinderfortsatz des Ankers 251 weist einen Absatz mit einer in Richtung des Elektromagneten 250 ausgerichteten Anschlagsfläche auf. Der Zylinderfortsatz ist von einer Blattfeder 246 umgriffen, welche an die Anschlagsfläche des Zylinderfortsatzes anliegt. Radial aussen liegt die Blattfeder 246 an einer am Ringelement 225 angeordneten, dem Zwischenboden 216 zugewandten weiteren Anschlagsfläche an. Die Blattfeder 246 weist mehrere Durchgänge für Wasser auf, sodass das Wasser von einer Seite der Blattfeder 246 auf die andere Seite der Blattfeder 246 fliessen kann und folglich der Wasserdruck im Pilotventilraum 220 zumindest annähernd ausgeglichen ist. Die Blattfeder 246 übt auf den Anker 251 eine Kraft aus, welche in Richtung der Symmetrieachse S, vom Elektromagneten 250 weg in Richtung des Pilotventilsitzes 244 gerichtet ist.

Der den Spulenkern 254 bildende Permanentmagnet und die Blattfeder 246 sind derart aufeinander abgestimmt, dass das Pilotventil 218 - gebildet aus dem Pilotventilsitz 244 und der an der Kreisscheibe 240 angeordneten Dichtungsscheibe 242 - eine stabile geschlossene Stellung (in Fig. 3 gezeigt) und eine stabile offene Stellung einnehmen kann und durch den Elektromagneten 250 von der geschlossenen Stellung in die offene Stellung und wieder zurück verbringbar ist. Der Elektromagnet 250 bildet zusammen mit dem Anker 251 und der Blattfeder 246 eine bistabile, elektromagnetische Antriebsanordnung 179.

Vom Pilotventilraum 220 führt der Abflusskanal 174' in den Durchflusskanal 207 und folglich in den Zuflusskanal 130. Der minimale Strömungsquerschnitt des Abflusskanals 174' ist grösser als der minimale Strömungsquerschnitt der als Drosselöffnung ausgebildeten Öffnung 154 der Ventilmembran 150.

Am Zwischenboden 216 ist ein in das Steuervolumen 152 in Richtung der Symmetrieachse S hineinragendes, zentriertes und vom Führungsglied 168 beabstandetes Halteelement 224 für eine Dichtungsmembran 226 ausgeformt. Das Halteelement 224 ist aus zwei Teilelementen 228, 228' gebildet, wobei das Teilelement 228 am Zwischenboden 216 angeordnet und das andere Teilelement 228' in das Teilelement 228 eingeschraubt ist. Das eingeschraubte Teilelement 228' weitet sich in seinem dem Führungsglied 168 zugewandten Endbereich kegelartig auf. Die Dichtungsmembran 226 mit der Form einer Kegelstumpfmantelfläche, umfasst das eingeschraubte Teilelement 228' in Umfangsrichtung vollständig und liegt dicht an den Kegelabschnitt des eingeschraubten Teilelements 228' an. Ein radial aussenliegender Bereich der Dichtungsmembran 226 ist mittels einer das Halteelement 224 umgreifenden Schraubenfeder 230 dicht an den Dichtungssitz 180' das Führungsglieds 168 in Anlage gehalten.

Der Abflusskanal 174' ist in Richtung der Symmetrieachse S verlaufend anfänglich durch einen Kanalabschnitt 232 durch das Halteelement 224 hindurch ausgebildet, dann durch ein zwischen dem Halteelement 224 mit der Dichtungsmembran 226 und dem Führungsglied 168 ausgebildeten Zwischenraum 234 und durch einen weiteren Kanalabschnitt 236 durch das Führungsglied hindurch.

Der zwischen dem stationären Halteelement 224 und dem beweglichen Führungsglied 168 ausgebildete Zwischenraum 234 ist mittels der Dichtungsmembran 226 gegenüber dem Steuervolumen 152 abgedichtet und begrenzt.

Die Funktionsweise der Zuflusssteuerung 132' ist wie folgt.

Anfänglich ist das Zuflussventil 144 und das Pilotventil 218 der Zuflusssteuerung 132' geschlossen. Da im Speisekanal 134 Leitungsdruck herrscht, herrscht ebenfalls im Ringkanal 212, im Steuervolumen 152 und im Pilotventilraum 220 Leitungsdruck.

Durch einen elektrischen Impuls auf den Elektromagneten 250 wird das Pilotventil 218 geöffnet, wodurch der Anker 251 mit der Dichtungsscheibe 242 des Pilotventils 218 in Anlage an die Spulenbaugruppe 223 gebracht wird. Folglich ist die am Anker 251 angeordnete Dichtungsscheibe 242 vom Pilotventilsitz 244 beabstandet, wodurch das Wasser durch den Abflusskanal 174' in den Durchflusskanal 207 abfliesst. Durch das Abliessen und den damit verbundenen Druckabfall im Pilotventilraum 220 und im Steuervolumen 152, öffnet sich das Zuflussventil 144, wodurch Wasser vom Ringkanal 212 in den Durchflusskanal 207 und weiter durch den Zuflusskanal 130 in den Zylinder 26 einfliesst.

Nachdem der Kolben 54 der Zylinder-Kolben-Anordnung 28 die Maximalhubposition Max erreicht hat, wird durch einen weiteren elektrischen Impuls auf den Elektromagneten 250 das Pilotventil 218 geschlossen. Da folglich kein Wasser mehr durch den Abflusskanal 174' aus dem Pilotventilraum 220 abfliessen kann, baut sich im Steuervolumen 152 und im Pilotventilraum 220 wieder der Leitungsdruck auf, wodurch das Zuflussventil 144 geschlossen wird.

In einer weiteren Ausführungsform wird die oben beschriebene Zuflusssteuerung 132' ohne das aussenliegende Zuflusssteuerungsgehäuse, analog zur Zuflusssteuerung 132 des ersten Ausführungsbeispiels, angewandt. Der Ventilsitz des Zuflussventils liegt folglich wieder am freiliegenden Endbereich der Wand 140, welche den Zuflusskanal 130 begrenzt. Der Ventilstift 166 des Führungsgliedes 168 ist wie im ersten Ausführungsbeispiel im Zuflusskanal 130 geführt.

In einer weiteren Ausführungsform wird auf die den Führungsstift 56 umgreifende Schraubenfeder 64 verzichtet, falls wie in der Zeichnung gezeigt, das Auslassventil 100 untenliegend ist. Da auf den Kolben 54 die Schwerkraft wirkt, wirkt folglich eine von der Maximalhubposition Max in Richtung der Minimalhubposition Min gerichtete Kraft auf den Kolben 54. Diese Kraft entspricht der Federkraft des beschriebenen Ausführungsbeispiels.

In einer weiteren Ausführungsform gelangt zur Betätigung eines Betätigungselements, insbesondere ein Betätigungselement einer Spülvorrichtung, der Führungsstift 56 zur Anwendung. In dieser Ausführungsform ist folglich der Führungsstift 56 ebenfalls Bestandteil des Betätigungsorgans. Vorzugsweise wirkt die Stirnfläche 56' des Führungsstifts 56 mit dem Betätigungselement zusammen.

## Patentansprüche

1. Hydraulischer Aktuator mit einer ein Zylindervolumen (72) definierenden Zylinder-Kolben-Anordnung (28), deren Kolben (54) innerhalb eines einen Boden (32) aufweisenden Zylinders (26) von einer Maximalhubposition (Max) in eine Minimalhubposition (Min) und durch Zufluss eines Fluids in das Zylindervolumen (72) von der Minimalhubposition (Min) in die Maximalhubposition (Max) bewegbar ist, und die Zylinder-Kolben-Anordnung (28) ein von einem geschlossenen Zustand in einen geöffneten Zustand und wieder zurück verbringbares Auslassventil (100) aufweist, welches in seinem geöffneten Zustand zum Auslassen des Fluids aus dem Zylindervolumen (72) bestimmt ist, und bei der Bewegung des Kolbens (54) durch einen an die Minimalhubposition (Min) angrenzenden Minimalhubendbereich (MinHEB) in die Minimalhubposition (Min) durch den Kolben (54) geschlossen wird, **dadurch gekennzeichnet, dass**
das Auslassventil (100) bei der Bewegung des Kolbens (54) durch einen an die Maximalhubposition (Max) angrenzenden Maximalhubendbereich (MaxHEB) in die Maximalhubposition (Max) mittels eines mit dem Kolben (54) verbundenen Betätigungsorgans (126) geöffnet wird und der Zufluss des Fluids in das Zylindervolumen (72) durch ein Zuflussventil (144) gesteuert ist.

2. Aktuator nach Anspruch 1, **dadurch gekennzeichnet, dass** das fest mit dem Kolben (54) verbundene Betätigungsorgan (126) in einer durch den Boden (32) des Zylinders (26) hindurchführende Durchgangsöffnung (34) geführt ist.

3. Aktuator nach Anspruch 1 oder 2, **dadurch gekennzeichnet, dass** das Zuflussventil (144) mittels eines Pilotventils (151, 218) gesteuert ist.

4. Aktuator nach Anspruch 3, **gekennzeichnet durch** eine bistabile, elektromagnetische Antriebsanordnung (179) für das Pilotventil (151, 218).

5. Aktuator nach einem der Ansprüche 1 bis 4, **dadurch gekennzeichnet, dass** die Zylinder-Kolben-Anordnung (28) eine Schraubenfeder (64) aufweist, welche auf den Kolben (54) eine von der Maximalhubposition (Max) in die Minimalhubposition (Min) gerichtete Kraft ausübt.

6. Aktuator nach einem der Ansprüche 1 bis 5, **dadurch gekennzeichnet, dass** der Zufluss des Fluids in das Zylindervolumen (72) durch einen Zuflussdurchlass an einem Mantel des Zylinders (26) erflogt.

7. Aktuator nach einem der Ansprüche 1 bis 6, **dadurch gekennzeichnet, dass** Auslassventil (100) im Boden (32) des Zylinders (26) angeordnet ist.

8. Aktuator nach einem der Ansprüche 1 bis 7, **dadurch gekennzeichnet, dass** das Auslassventil (100) einen Stössel (110) und einen am Stössel (110) angeordneten Ventilteller (112) aufweist und die Verschiebungsrichtung des Stössels (110) zumindest nahezu parallel zur Verschiebungsrichtung des Kolbens (54) ist.

9. Aktuator nach einem der Ansprüche 1 bis 8, **gekennzeichnet durch** einen becherartig ausgebildeten Kolben (54) und **durch** eine vom Kolben (54) gestützte Rollmembran (70), die einerseits am Kolben (54) und andererseits zwischen den Zylinder (26) bildende oberen und unteren Gehäuseteile (12, 14) gehalten ist.

10. Aktuator nach einem der Ansprüche 1 bis 9, **gekennzeichnet durch** einen Führungsstift (56), welcher mit dem Kolben (90) fest verbunden ist, vom Aktuatorgehäuse (10) geführt ist und dieses durchgreift.
